# EUROPEAN PATENT SPECIFICATION

(11) **EP 4 002 943 B1**
(45) Date of publication and mention of the grant of the patent: **24.04.2024**
(21) Application number: 19937530.4
(22) Date of filing: 16.07.2019
(51) Int. Cl.: H04W 72/02, H04B 7/0404, H04B 7/06, H04W 72/0453

(54) **DATA TRANSMISSION METHOD, APPARATUS, AND STORAGE MEDIUM**
DATENÜBERTRAGUNGSVERFAHREN, GERÄT UND SPEICHERMEDIUM
PROCÉDÉ DE TRANSMISSION DE DONNÉES, APPAREIL ET SUPPORT D'INFORMATIONS

(43) Date of publication of application: 25.05.2022
(73) Proprietor: Beijing Xiaomi Mobile Software Co., Ltd., Beijing 100085 (CN)
(72) Inventor: LI, Mingju, Beijing 100085 (CN)
(74) Representative: Kudlek, Franz Thomas
(86) International application number: PCT/CN2019/096234
(87) International publication number: WO 2021/007786

(56) References cited:
- WO-A1-2016/209441
- CN-A- 106 452 708
- CN-A- 109 496 457
- CN-A- 109 983 797
- LG ELECTRONICS: "Summary on wide-band operation for NR-U", 3GPP DRAFT; R1-1907653, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Reno, USA; 20190513 - 20190517 16 May 2019 (2019-05-16), pages 1-12, XP051739942, Retrieved from the Internet: URL:http://www.3gpp.org/ftp/tsg%5Fran/WG1% 5FRL1/TSGR1%5F97/Docs/R1%2D1907653%2Ezip [retrieved on 2019-05-16]
- AT&T: "Wideband operation for NR-based access to unlicensed spectrum", 3GPP DRAFT; R1-1907163, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Reno, USA; 20190513 - 20190517 13 May 2019 (2019-05-13), XP051728608, Retrieved from the Internet: URL:http://www.3gpp.org/ftp/Meetings%5F3GP P%5FSYNC/RAN1/Docs/R1%2D1907163%2Ezip [retrieved on 2019-05-13]
- NOKIA ET AL: "On wideband operation in NR-U", 3GPP DRAFT; R1-1906657_WB OPERATION_NOKIA, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Reno, Nevada, USA; 20190513 - 20190517 13 May 2019 (2019-05-13), XP051728107, Retrieved from the Internet: URL:http://www.3gpp.org/ftp/Meetings%5F3GP P%5FSYNC/RAN1/Docs/R1%2D1906657%2Ezip [retrieved on 2019-05-13]
- CONVIDA WIRELESS: "Design considerations on channel accessing", 3GPP DRAFT; R1-1811625_DESIGN CONSIDERATIONS ON CHANNEL ACCESSING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRAN , vol. RAN WG1, no. Chengdu, China; 20180808 - 20180812 29 September 2018 (2018-09-29), XP051519019, Retrieved from the Internet: URL:http://www.3gpp.org/ftp/tsg%5Fran/WG1% 5FRL1/TSGR1%5F94b/Docs/R1%2D1811625%2Ezip [retrieved on 2018-09-29]
- LENOVO ET AL: "CAPC selection behavior for NR-U transmissions", 3GPP DRAFT; R2-1906723, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Reno, USA; 20190513 - 20190517 13 May 2019 (2019-05-13), XP051730180, Retrieved from the Internet: URL:http://www.3gpp.org/ftp/Meetings%5F3GP P%5FSYNC/RAN2/Docs/R2%2D1906723%2Ezip [retrieved on 2019-05-13]
- NOKIA et al.: "3GPP TSG RAN WG1 Meeting #97 R1-1906657", On wideband operation in NR-U, 17 May 2019 (2019-05-17), XP051728107, DOI: 20200402191324X
- LG ELECTRONICS: "3GPP TSG RAN WG1 #97 R1-1907769", Summary #2 on wide-band operation for NR-U, 17 May 2019 (2019-05-17), XP051740042, DOI: 20200402191430X

## Description

### TECHNICAL FIELD

The disclosure relates to the field of communication technologies, and more particularly to a method and an apparatus for transmitting data, and a storage medium.

### BACKGROUND

In a licensed-assisted-access (LAA) unlicensed spectrum, a listen-before-talk (LBT) channel access mechanism is adopted.

In a scenario where a terminal includes multiple antenna panels, an active bandwidth part (BWP) on each panel configured for the terminal is the same, that is, the bandwidth and the spectral position are the same. In a new radio unlicensed (NR-U) spectrum, the maximum bandwidth of the active BWP may be the same as a bandwidth of a component carrier (CC) at most. In the NR-U spectrum, the maximum bandwidth on each CC may reach 100MHz or even 400MHz, while the LBT bandwidth unit (BWU) is up to 20MHz. Therefore, for each terminal, the active BWP includes multiple LBT BWUs. In a multi-panel scenario, the terminal needs to perform channel detection before transmitting uplink information.

The prior art includes the following:
LG ELECTRONICS: "Summary on wide-band operation for NR-U", 3GPP DRAFT; R1-1907653, 3RD GENERATION PARTNERSHIP PROJECT (3GPP), MOBILE COMPETENCE CENTRE; 650, ROUTE DES LUCIOLES; F-06921 SOPHIA-ANTIPOLIS CEOEX; FRANCE, vol. RAN WG1, no. Reno, USA; 20190513 - 20190517 16 May 2019 (2019-05-16), pages 1-12, XP051739942.

### SUMMARY

The invention is defined by the independent claims. Advantageous embodiments are the subject matter of the dependent claims.

According to a first aspect aspect of the invention, there is provided a method for transmitting data comprising the features of claim 1.

In an embodiment, performing the channel detection by each of the at least two antenna panels on each BWU to be detected, includes: selecting individually a channel detection mechanism and/or a channel detection parameter, by each of the at least two antenna panels, based on a channel detection priority of uplink information to be transmitted; and performing individually the channel detection by each of the at least two antenna panels on each BWU to be detected based on the channel detection mechanism and/or channel detection parameter selected individually.

In an embodiment, the one or more idle BWUs detected by each of the at least two antenna panels include one or more same BWUs; and the first BWU set is a set including the one or more same idle BWUs detected by each of the at least two antenna panels.

In an embodiment, the one or more idle BWUs detected by each of the at least two antenna panels are not completely the same; and the first BWU set is a set including all idle BWUs detected by each of the at least two antenna panels.

In an embodiment, the one or more idle BWUs detected by each of the at least two antenna panels are not completely the same; and the first BWU set is a set including all idle BWUs detected by a designated antenna panel of the at least two antenna panels.

In an embodiment, the method further includes: transmitting indication information for indicating the one or more idle BWUs detected by each antenna panel and/or one or more BWUs for transmitting uplink information by each antenna panel.

According to a second aspect of the invention, an apparatus for transmitting data comprising the features of claim 11 is provided. In an embodiment, performing the channel detection by each of the at least two antenna panels on each BWU to be detected, includes: selecting individually a channel detection mechanism and/or a channel detection parameter, by each of the at least two antenna panels, based on a channel detection priority of uplink information to be transmitted; and performing individually the channel detection by each of the at least two antenna panels on each BWU to be detected based on the channel detection mechanism and/or channel detection parameter selected individually.

In an embodiment, the one or more idle BWUs detected by each of the at least two antenna panels include one or more same BWUs; and the first BWU set is a set including the one or more same idle BWUs detected by each of the at least two antenna panels.

In an embodiment, the one or more idle BWUs detected by each of the at least two antenna panels are not completely the same; and the first BWU set is a set including all idle BWUs detected by each of the at least two antenna panels.

In an embodiment, the one or more idle BWUs detected by each of the at least two antenna panels are not completely the same; and the first BWU set is a set including all idle BWUs detected by a designated antenna panel of the at least two antenna panels.

In an embodiment, the transmitting unit is further configured to: transmit indication information for indicating the one or more idle BWUs detected by each antenna panel and/or one or more BWUs for transmitting uplink information by each antenna panel.

The invention can also be implemented with a device for transmitting data including: a processor; and a memory configured to store instructions executable by the processor, in which the processor is configured to perform the method as described in the first aspect or any embodiment of the first aspect.

According to a third aspect of the invention, a non-transitory computer-readable storage medium comprising the features of claim 12 is provided. When instructions in the storage medium are executed by a processor of a mobile terminal, the mobile terminal performs the method as described in the first aspect or any embodiment of the first aspect.

It is to be understood that both the foregoing general description and the following detailed description are exemplary and explanatory only and are not restrictive of the disclosure.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.
FIG. 1 is a diagram illustrating a communication system according to some embodiments.
FIG. 2 is a diagram illustrating detecting idle BWUs by multiple antenna panels according to some embodiments.
FIG. 3 is a flowchart illustrating a method for transmitting data according to an embodiment.
FIG. 4 is a block diagram illustrating an apparatus for transmitting data according to an embodiment.
FIG. 5 is a block diagram illustrating a device according to an embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to the disclosure as recited in the appended claims.

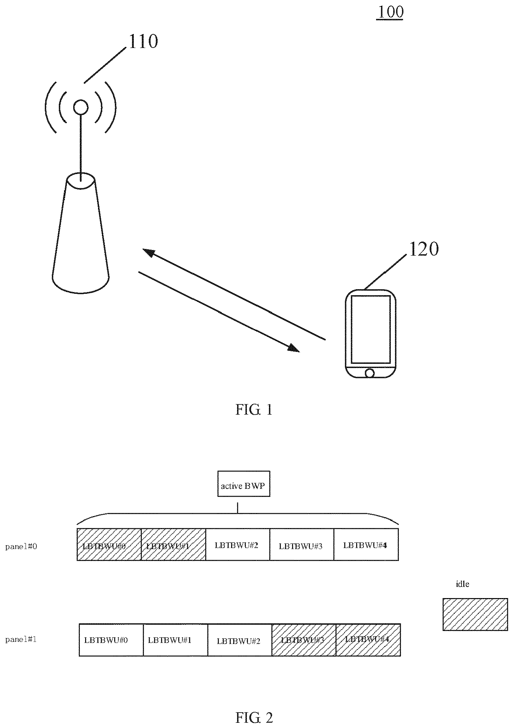

A method for allocating resources provided in embodiments of the disclosure may be applicable to a wireless communication system 100 illustrated in FIG. 1. Referring to FIG. 1, the wireless communication system 100 includes a network device 110 and a terminal 120. The terminal 120 is connected to the network device 110 through wireless resources, and transmits and receives data.

It is understood that the wireless communication system 100 illustrated in FIG. 1 is only for schematic illustration. The wireless communication system 100 may also include other network devices, such as core network devices, wireless relay devices and wireless backhaul devices, which are not illustrated in FIG. 1. The embodiments of the disclosure do not limit the number of network devices and the number of terminals included in the wireless communication system.

It is further understood that the wireless communication system in the embodiments of the disclosure is a network that provides wireless communication functions. The wireless communication system may employ different communication technologies, such as code division multiple access (CDMA), wideband code division multiple access (WCDMA), time division multiple access (TDMA), frequency division multiple access (FDMA), orthogonal frequency-division multiple access (OFDMA), single carrier frequency division multiple access (SC-FDMA), and carrier sense multiple access with collision avoidance. The networks may be grouped into 2G (the second generation) network, 3G (the third generation) network, 4G (the fourth generation) network and the future evolution network such as 5G (the fifth generation) network based on different network capacities, speeds, delays and other factors. The 5G network may be also called a new radio (NR) network. For the convenience of description, the wireless communication network is sometimes referred to simply as the network in the disclosure.

Furthermore, the network device 110 involved in the disclosure may also be referred to as a wireless access network device. The wireless access network device may be a base station, an evolved base station (evolved node B), a home base station, an access point (AP) in a wireless fidelity (WIFI) system, a wireless relay node, a wireless backhaul node, a transmission point (TP), a transmission and reception point (TRP) or the like, which may also be a gNB in the NR system or a component or part of the equipment constituting the base station. When it is a vehicle-to-vehicle (V2X) communication system, the network device may be a vehicle-mounted device. It should be understood that, in the embodiments of the disclosure, the specific technology and device form adopted by the network device are not limited. In the disclosure, the network device may provide communication coverage for a specific geographic area and may communicate with terminals (cell) located in the coverage area.

Furthermore, the terminal 120 involved in the disclosure may also be referred to as a terminal device, user equipment (UE), a mobile station (MS), a mobile terminal (MT) or the like, which may be a device that provides voice and/or data connectivity to a user. For example, the terminal may be a handheld device with a wireless connection function, a vehicle-mounted device or the like. At present, some examples of terminals are: smart phones, pocket personal computers (PPCs), handheld computers, personal digital assistants (PDAs), notebook computers, tablet computers, wearable devices, vehicle equipment or the like. In addition, when it is the V2X communication system, the terminal device may also be a vehicle-mounted device. It should be understood that the embodiments of the disclosure do not limit the specific technology and device form adopted by the terminal.

In the embodiments of the disclosure, the network device 110 and the terminal 120 may work on an unlicensed spectrum. Before using the unlicensed spectrum, the network device 110 and the terminal 120 need to adopt a listen-before-talk (LBT) channel access mechanism to perform channel detection. The LBT is also called channel listening, which means that a transmitting node needs to listen to the channel first before transmitting data, and transmits data when the channel is successfully listened. In the channel listening process, the transmitting node detects a received signal strength indication (RSSI) value on the surrounding unlicensed spectrum. If the RSSI value is higher than a threshold, it means that other surrounding devices are using the unlicensed spectrum. The transmitting point may not use the unlicensed spectrum temporarily. Otherwise, it means that no other surrounding devices are using the unlicensed spectrum, so the transmitting node may use the unlicensed spectrum for data transmission.

The terminal 120 includes one or more antenna panels.

In the LAA unlicensed spectrum, the maximum bandwidth on each CC (that is, each cell) is 20MHz and the maximum LBT bandwidth may be 20MHz, so there is one LBT bandwidth on each CC, and the channel detection result on the entire CC is consistent, either the entire bandwidth is idle or the entire bandwidth is occupied by other devices.

In the NR-U spectrum, the maximum channel bandwidth of each carrier may reach 400MHz. Considering capabilities of the terminal 120, the maximum bandwidth supported by the terminal 120 may be less than 400 MHz, and the terminal 120 may be configured for multiple small bandwidth parts (BWPs). The network device 110 may configure more than one BWP for the terminal 120. At this time, the network device 110 needs to tell the terminal which BWP works on, that is, which BWP is activated. The BWP activated may be referred to as an active BWP. The terminal 120 transmits on the corresponding active BWP. In the unlicensed frequency band, the network device or the terminal also needs to perform channel listening before transmitting on the active BWP, and the information may be transmitted only when the channel is idle. In the NR-U spectrum, the maximum bandwidth on each CC may reach 100MHz or even 400MHz, while the maximum bandwidth of the LBT BWU may reach 20MHz. Therefore, for each terminal, the active BWP may include multiple LBT BWUs.

Currently, when the terminal 120 includes multiple panels, the active BWPs on multiple panels configured for the terminal are the same, that is, the bandwidth and the spectral position are the same. For example, before channel detection, each uplink active BWP configured by the network device 110 for the terminal 120 includes 5 LBT BWUs as illustrated in FIG. 2. The terminal 120 needs to perform channel detection before transmitting uplink information. It is a problem that needs to be solved how multiple panels perform channel detection, and which BWUs are used by the terminal to transmit uplink information when some idle LBT BWUs in the current active BWP exist.

The disclosure provides a method for transmitting data. In the method, when the terminal includes multiple panels, multiple panels perform channel detection independently or separately, and uplink information such as uplink signaling or data may be transmitted based on one or more idle BWUs detected by multiple panels, which may improve the spectrum efficiency while reducing the terminal power consumption.

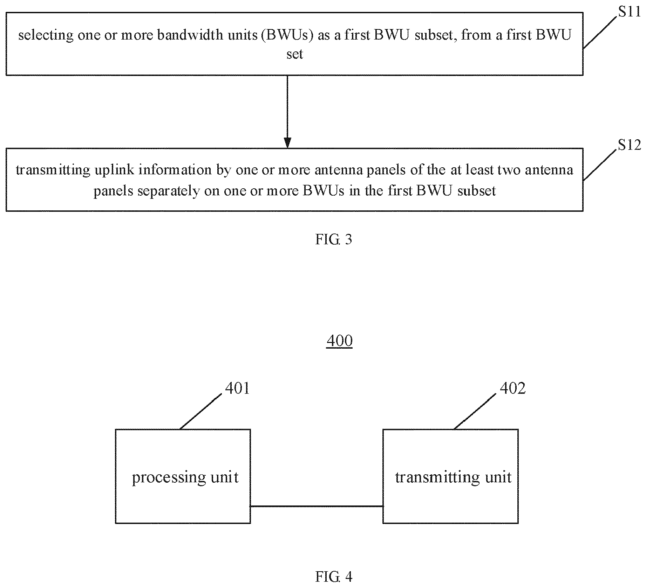

FIG. 3 is a flowchart illustrating a method for transmitting data according to an embodiment. As illustrated in FIG. 3, the method is applicable to a terminal and includes the following.

In S 11, one or more BWUs are selected from a first BWU set as a first BWU subset.

In the disclosure, the terminal includes multiple panels, where multiple panels may be understood as at least two panels. Each of the at least two panels may perform channel detection on each BWU to be detected, and the one or more idle BWUs detected by each of the at least two panels may be determined.

The first BWU set is determined based on the one or more idle BWUs detected by each of the at least two panels on an active BWP.

In S12, uplink information is transmitted by one or more panels of the at least two panels separately on one or more BWUs in the first BWU subset.

In the disclosure, each panel transmits uplink information on the same BWU or different BWUs. Uplink information includes an uplink reference signal, a sounding reference signal (SRS), a demodulation reference signal (DMRS), a control signal/data carried on a physical uplink control channel (PUCCH), a control signal/data carried on a physical uplink share channel (PUSCH) or a random access preamble carried on a physical random access channel (PRACH).

In the disclosure, when the terminal includes multiple panels, multiple panels perform channel detection independently or separately, and uplink information such as uplink signaling or data may be transmitted based on the one or more idle BWUs detected by multiple panels, which may improve the spectrum efficiency while reducing the terminal power consumption.

The disclosure may describe the above-mentioned method for transmitting data in combination with practical applications.

The disclosure first describes a process of channel detection of each panel of the terminal.

In the disclosure, if the terminal needs multiple panels to transmit uplink information, multiple panels separately perform channel detection before transmitting uplink information. The BWU that is performed with channel detection by the terminal is determined based on downlink control information (DCI) or an uplink grant-free (UL grant free) resource pre-configuration signaling. For example, the terminal uses the following manners to determine whether it needs to transmit uplink information on multiple panels, and which BWU on the active BWP is used for channel detection and transmitting uplink information.

In an example, a DCI signaling is downlink resource scheduling information. The network device transmits the DCI signaling to schedule the terminal to transmit uplink information on a configured BWU on the active BWP, multiple panels are used to perform channel detection on the configured BWU scheduled by the DCI signaling, and multiple panels are used to transmit uplink information.

In another example, the network device pre-transmits a radio resource control (RRC) and/or media access control (MAC) signaling to preconfigure some resources on the BWU for UL grant free, and the terminal uses multiple panels to perform channel detection on the pre-configured BWU and transmit uplink information, to improve the reliability or throughput.

In another example, the terminal itself decides the BWU that is performed with channel detection by multiple panels, and transmits uplink information. For example, when there is no downlink control information and uplink grant-free resource pre-configuration signaling, the terminal may perform channel detection on all BWUs on the active BWP, and transmit uplink information on the idle BWU.

In the disclosure, for the convenience of description, the BWU that is performed with channel detection by multiple panels, which is determined by the terminal based on DCI signaling, or UL grant free resource pre-configuration signaling, or itself, is referred to as the BWU to be detected.

Furthermore, when each panel of the terminal in the disclosure performs channel detection on each BWU to be detected, each panel selects a channel detection mechanism and/or a channel detection parameter based on a channel detection priority of uplink information to be transmitted, and performs channel detection on each BWU to be detected based on the selected channel detection mechanism and/or the selected channel detection parameter.

In the disclosure, the channel detection mechanism includes Cat.2 and Cat.4. The channel detection parameter includes a contention window size (CWS), a maximum channel occupation duration and a parameter for determining a time granularity.

The Cat.2 channel detection mechanism is a one-time detection, that is, if the channel is detected to be idle within 25µs, it means that the channel may be occupied, but the channel occupation duration is relatively short, such as 1ms. The Cat.4 is a channel detection mechanism based on a variable CWS. It is detected whether the channel is idle within a first time granularity first, when it is detected that the channel is idle, a random number N is selected between 0 and CWS and it is detected whether the channel is idle within a second time granularity, and when it is detected that the channel is idle within the second time granularity, 1 is subtracted from N; otherwise, it is detected whether the channel is idle within the first time granularity again; when it is detected that the channel is idle again within the first time granularity, 1 is subtracted from N, and it is detected whether the channel is idle within the second time granularity again, then continue... When the random number N is reduced to 0, the channel is idle, and it starts to occupy the channel. After the maximum channel occupancy duration, it needs to perform channel detection again. The first time granularity is 16µs+M*9µs. M is determined based on mp (priority parameter). M varies with the priority. The second time granularity is 9µs. The priorities of Cat.4 are different, its M, CWS and channel occupation duration are different. For example, the higher the priority, the smaller the M, the smaller the CWS, and the shorter the channel occupancy duration. In this way, the channel is easier to seize but the occupied duration is shorter. This priority is generally used for delay-sensitive services.

In the disclosure, when the channel detection priority of uplink information to be transmitted of each panel is the same, and the selected channel detection mechanism is the same.

In the disclosure, when channel detection is performed on multiple BWUs for a certain panel, each BWU may be performed with channel detection independently, or a main BWU is selected for the Cat.4 channel detection while an auxiliary BWU only is detected to be idle within 25µs before N=0 of the main BWU, both the main BWU and the auxiliary BWU are detected to be idle. When multiple BWUs of each panel use the main BWU manner for channel detection, the main BWU of each panel may be selected independently.

In the disclosure, each panel of the terminal independently detects its own channel state, for example, each panel uses the Cat.4 channel detection mechanism, and there is no distinction between the main BWU and the auxiliary BWU.

In the disclosure, when the terminal has multiple panels, multiple panels independently select the channel detection mechanism and channel detection parameter based on the priority of uplink information to be transmitted and perform channel detection independently, thereby improving the spectrum efficiency and reducing the terminal power consumption.

In the disclosure, multiple panels of the terminal use the same active BWP. The terminal uses different manners to determine the active BWP for transmitting uplink information according to different channel detection results obtained by the detection of each panel on the LBT BWU in the active BWP. The following may describe different processing manners for different channel detection results in combination with practical applications.

In the disclosure, in order to inform the network device, the one or more idle BWUs detected actually by the terminal and/or one or more BWUs that the terminal actually uses to transmit uplink information, the terminal needs to transmit an indication signaling to the network device and the indication signaling may also include the channel occupation duration of each BWU. This has two advantages. One is that the network device only needs to receive uplink information on the BWU that the terminal detects that it is idle or is actually used to transmit uplink information; and anther is that the network device may use the idle BWU to transmit downlink information when the terminal does not use the idle BWU during the channel occupation duration.

In an implementation manner, the one or more idle BWUs detected by each of the at least two panels include one or more same BWUs. The first BWU set is a set including the one or more same idle BWUs detected by each of the at least two panels.

The one or more idle BWUs detected by each panel on the active BWP include the one or more same idle BWUs. There are two examples. In the first example, the one or more idle BWUs detected by each panel in the active BWP currently used by the terminal are exactly the same, namely, for the active BWP of a certain terminal, the detection result of each panel is the same. For example, in FIG. 2, the idle BWUs detected by Panel#0 are BWU#0 and BWU#1, and the idle BWUs detected by Panel#1 are also BWU#0 and BWU#1. In the second example, the part of the one or more idle BWUs detected by each panel in the active BWP currently used by the terminal is the same. For example, in FIG. 2, the idle BWUs detected by Panel#0 are BWU#0 and BWU#1, and the idle BWU detected by Panel#1 is BWU#0.

In the following, the disclosure may describe the implementation of determining the first BWU subset in the two examples where the one or more idle BWUs detected by each panel include the one or more same BWUs.

Example 1: the one or more idle BWUs detected by each panel in the active BWP currently used by the terminal are exactly the same.

In the disclosure, the one or more idle BWUs detected by each panel in the active BWP currently used by the terminal are completely the same, and the terminal uses the one or more same idle BWUs detected as the first BWU set. The terminal selects one or more BWUs from the first BWU set as the first BWU subset, and uses the first BWU subset to transmit uplink information.

Furthermore, in the disclosure, the terminal needs to transmit indication information, which is configured to indicate the one or more idle BWUs detected by each panel and/or one or more BWUs for transmitting uplink information by each panel. The terminal informs, by transmitting the indication information, the network device of which one or more BWUs are idle or on which one or more BWUs the terminal transmits uplink information. Then in the next channel occupation duration, the network device receives uplink information from the terminal on the corresponding one or more BWUs.

In an implementation manner, the terminal transmits the indication information in the following manner.

Transmitting the indication information based on a DMRS; transmitting the indication information based on an uplink reference signal, such as a SRS; transmitting the indication information based on, a state whether a BWU is idle, indicated by a PUCCH; transmitting the indication information based on, a state whether a BWU is idle, indicated by a PUSCH; transmitting the indication information based on, a state whether a BWU is idle, indicated by a DMRS and a PUCCH; transmitting the indication information based on, a state whether a BWU is idle, indicated by a DMRS and a PUSCH; transmitting the indication information based on a signal transmitted on an idle BWU, such as a shock wave-like signal; transmitting the indication information based on a wireless fidelity (WIFI) preamble; or transmitting the indication information based on a random access preamble transmitted on an idle BWU.

It is understood that, in the embodiments of the disclosure, each panel of the terminal detects the one or more same idle BWUs, so the terminal uses the same indication information to indicate the network device which one or more idle BWUs are detected by each panel. In addition, in the embodiments of the disclosure, since each panel of the terminal detects that the one or more idle BWUs are exactly the same, each panel of the terminal may transmit uplink information on the one or more idle BWUs detected.

Example 2: the part of the one or more idle BWUs detected by each panel in the active BWP currently used by the terminal is the same.

In the disclosure, if the one or more idle BWUs detected by each panel in the active BWP currently used by the terminal are partly the same and partly different, the one or more same idle BWUs detected by each panel may be used as the first BWU set. One or more BWUs are selected from the first BWU set as the first BWU subset, and uplink transmission may be performed based on the first BWU subset. In other words, in the disclosure, if the one or more idle BWUs detected by each panel in the active BWP currently used by the terminal are partly the same and partly different, a subset of an intersection of the one or more idle BWUs detected by each panel is used for uplink transmission. For example, in FIG. 2, the idle BWUs detected by Panel#0 are BWU#0 and BWU#1, and the idle BWU detected by Panel#1 is BWU#0, and BWU#0 is determined as the first BWU subset.

Furthermore, in the disclosure, the terminal needs to transmit indication information, which is configured to indicate the one or more idle BWUs detected by each panel and/or one or more BWUs for transmitting uplink information by each panel. The terminal informs, by transmitting the indication information, the network device of which one or more BWUs are idle or on which one or more BWUs the terminal transmits uplink information. That is, the terminal selects a subset from the idle BWU set for uplink transmission. The network device receives uplink information from the terminal on the corresponding one or more BWUs. Furthermore, since each panel transmits uplink information on the one or more same BWUs, the indication information may be transmitted together for each panel. The network device needs to receive uplink transmission of the terminal on the one or more BWUs that the terminal has uplink transmission based on the indication information transmitted by the terminal, or use the one or more idle BWUs for downlink transmission when the terminal does not perform uplink transmission within the channel occupation duration.

In another implementation manner, the one or more idle BWUs detected by each of the at least two panels in the active BWP are not completely the same. The first BWU set is a set including all idle BWUs detected by each of the at least two panels.

In the disclosure, the one or more idle BWUs detected by each of the at least two panels in the active BWP are not completely the same. It may be that the one or more idle BWUs detected by each of the at least two panels in the active BWP include the same and different BWU(s), or only include different BWU(s).

In the disclosure, when the one or more idle BWUs detected by each of the at least two panels in the active BWP include different BWU(s), the following two manners are used to determine the first BWU set.

In an implementation manner, one or more BWUs are selected as the first BWU subset from the first BWU set including all the idle BWUs detected by each panel in the active BWP, and uplink transmission is performed based on the first BWU subset, to use the BWUs detected by each panel as much as possible. In the disclosure, the first BWU set may be understood as a union of the one or more BWUs detected by each panel. The first BWU subset may be understood as a subset of the union of the one or more BWUs detected by each panel. The number of BWU(s) included in the first BWU subset may be one or more. For example, the maximum number of the first BWU subset may be all BWUs which are detected to be idle by each panel.

Furthermore, in the disclosure, the terminal needs to transmit indication information, which is configured to indicate the one or more idle BWUs detected by each panel and/or one or more BWUs for transmitting uplink information by each panel. The terminal informs, by transmitting the indication information, the network device of which one or more BWUs are idle or on which one or more BWUs the terminal transmits uplink information. That is, the terminal selects a subset from the idle BWU set for uplink transmission. The network device receives uplink information from the terminal on the corresponding one or more BWUs. Furthermore, since the one or more idle BWUs detected by each panel may be different, or uplink information may be transmitted on different BWUs, in the disclosure, the terminal independently transmits indication information for each panel. It may be understood that, when there are different panels in at least two panels, the indication information is transmitted for each of the different panels. The one or more idle BWUs detected by the difference panels are different and/or the one or more BWUs that the difference panels transmit uplink information are different.

It is understood that if some BWUs are detected to be idle on a certain panel, but the terminal does not transmit uplink information on these BWUs, these BWUs are also classified as BWUs that the terminal does not transmit uplink on. The network device needs to receive uplink transmission of the terminal on the one or more BWUs that the terminal has uplink transmission based on the indication information transmitted by the terminal.

In another implementation manner, the one or more idle BWUs detected by each of the at least two panels in the active BWP are not completely the same. The first BWU set is a set including all idle BWUs detected by a designated antenna panel of the at least two antenna panels. The designated panel is a panel with the largest number of detected idle BWUs. In this way, the first BWU subset is determined based on the designated panel. For example, in FIG. 2, Panel#0 detects more idle BWUs, then Panel#0 is used to transmit uplink information, and the first BWU subset is configured with Panel#0 as the main component.

Furthermore, in the disclosure, the terminal needs to transmit indication information, which is configured to indicate the one or more idle BWUs detected by each panel and/or one or more BWUs for transmitting uplink information by each panel. The terminal informs, by transmitting the indication information, the network device of which one or more BWUs are idle or on which one or more BWUs the terminal transmits uplink information. The network device receives uplink information from the terminal on the corresponding one or more BWUs. Furthermore, in the embodiments, uplink information is transmitted on the designated panel, so, in the disclosure, the indication information is transmitted for the designated panel, and there is no need to transmit the indication information for panels other than the designated panel. Of course, for each panel other than the designated panel, a MAC signaling may also be transmitted to indicate the network device to temporarily activate the panel.

The disclosure is directed to a case that when the one or more idle BWUs detected by each of the at least two antenna panels are completely different, if one panel detects the one or more idle BWUs, and other panels except the panel which detects the one or more idle BWUs do not detect the idle BWU, the designated panel is the panel which detects the one or more idle BWUs.

In the above-mentioned embodiments of the disclosure, when the indication information is not transmitted separately for each panel, the following two manners may be used. In one manner, if all panels detect idle BWU(s), it is idle, otherwise it is busy; and in another manner, as long as there is a panel that detects idle BWU(s), it is idle, otherwise it is busy. The same applies to indicating the BWU that transmits uplink information.

In the disclosure, when the terminal has multiple panels, multiple panels independently or separately select the channel detection mechanism and channel detection parameter based on the priority of uplink information to be transmitted, independently or separately perform channel detection, and perform uplink transmission based on the one or more idle BWUs detected by multiple panels. At the same time, the terminal informs the network device of which one or more BWUs are detected by each panel to be idle or on which one or more BWUs uplink information is transmitted, which may improve the spectrum efficiency while reducing the terminal power consumption.

Based on the same concept, the embodiments of the disclosure also provide an apparatus for transmitting data.

It may be understood that, in order to realize the above-mentioned functions, the apparatus for transmitting data provided in the embodiments of the disclosure includes hardware structures and/or software modules corresponding to each function performing. In combination with units and algorithm actions of examples disclosed in the embodiments of the disclosure, the embodiments of the disclosure may be implemented in the form of hardware or a combination of hardware and computer software. Whether a function is executed by hardware or computer software-driven hardware depends on the specific application and design constraints of the technical solution. Those skilled in the art may use different manners for each specific application to implement the described functions, but such implementation should not be considered as going beyond the scope of the technical solutions of the embodiments of the disclosure.

FIG. 4 is a block diagram illustrating an apparatus for transmitting data according to an embodiment. The apparatus 400 includes a processing unit 401 and a transmitting unit 402, as illustrated in FIG. 4.

The processing unit 401 is configured to select one or more BWUs as a first BWU subset, from a first BWU set, in which the first BWU set is determined based on one or more idle BWUs detected by each of the at least two antenna panels on an active BWP. The transmitting unit 402 is configured to transmit uplink information by one or more antenna panels of the at least two antenna panels separately on one or more BWUs in the first BWU subset.

In an embodiment, the processing unit 401 is further configured to: perform detection by each of the at least two antenna panels on each BWU to be detected and determining the idle BWUs detected by each antenna panel.

In an embodiment, the BWU to be detected is determined based on downlink control information or an uplink grant-free resource pre-configuration signaling.

In an embodiment, performing the channel detection by each of the at least two antenna panels on each BWU to be detected, includes: selecting individually a channel detection mechanism and/or a channel detection parameter, by each of the at least two antenna panels, based on a channel detection priority of uplink information to be transmitted; and performing individually the channel detection by each of the at least two antenna panels on each BWU to be detected based on the channel detection mechanism and/or channel detection parameter selected individually.

In an embodiment, the one or more idle BWUs detected by each of the at least two antenna panels include one or more same BWUs; and the first BWU set is a set including the one or more same idle BWUs detected by each of the at least two antenna panels.

In an embodiment, the one or more idle BWUs detected by each of the at least two antenna panels are not completely the same; and the first BWU set is a set including all idle BWUs detected by each of the at least two antenna panels.

In an embodiment, the one or more idle BWUs detected by each of the at least two antenna panels are not completely the same; and the first BWU set is a set including all idle BWUs detected by a designated antenna panel of the at least two antenna panels.

In an embodiment, the designated antenna panel is an antenna panel with a largest number of idle BWUs detected.

In an embodiment, the transmitting unit 402 is further configured to: transmit indication information for indicating the one or more idle BWUs detected by each antenna panel and/or one or more BWUs for transmitting uplink information by each antenna panel.

In an embodiment, the transmitting unit 402 is configured to transmit the indication information by one or a combination of: transmitting the indication information based on a demodulation reference signal (DMRS); transmitting the indication information based on a reference signal; transmitting the indication information based on, a state whether a BWU is idle, indicated by a physical uplink control channel (PUCCH); transmitting the indication information based on, a state whether a BWU is idle, indicated by a physical uplink shared channel (PUSCH); transmitting the indication information based on a signal transmitted on an idle BWU; transmitting the indication information based on a wireless fidelity preamble; and transmitting the indication information based on a random access preamble transmitted on an idle BWU.

In an embodiment, there are different antenna panels in the at least two antenna panels, and one or more idle BWUs detected by the difference antenna panels are different and/or one or more BWUs for transmitting uplink information are different; and the transmitting unit 402 is configured to transmit the indication information separately for each of the different antenna panels.

With respect to the apparatuses in the above embodiments, the specific manners for performing operations for individual modules therein have been described in detail in the embodiments regarding the methods, which will not be elaborated herein.

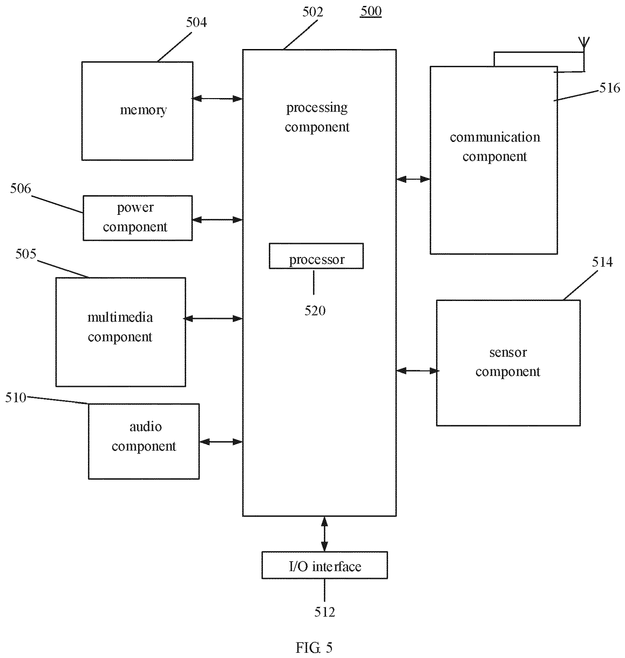

FIG. 5 is a block diagram of a device 500 for transmitting data according to an embodiment. For example, the device 500 may be a mobile phone, a computer, a digital broadcast terminal, a messaging device, a gaming console, a tablet, a medical device, exercise equipment, a personal digital assistant, and the like.

Referring to FIG. 5, the device 500 may include one or more of the following components: a processing component 502, a memory 504, a power component 506, a multimedia component 508, an audio component 510, an input/output (I/O) interface 512, a sensor component 514, and a communication component 516.

The processing component 502 typically controls overall operations of the device 500, such as the operations associated with display, telephone calls, data communications, camera operations, and recording operations. The processing component 502 may include one or more processors 520 to execute instructions to perform all or part of the actions in the above described methods. Moreover, the processing component 502 may include one or more modules which facilitate the interaction between the processing component 502 and other components. For instance, the processing component 502 may include a multimedia module to facilitate the interaction between the multimedia component 508 and the processing component 502.

The memory 504 is configured to store various types of data to support the operation of the device 500. Examples of such data include instructions for any applications or methods operated on the device 500, contact data, phonebook data, messages, pictures, video, etc. The memory 504 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 506 provides power to various components of the device 500. The power component 506 may include a power management system, one or more power sources, and any other components associated with the generation, management, and distribution of power in the device 500.

The multimedia component 508 includes a screen providing an output interface between the device 500 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 508 includes a front camera and/or a rear camera. The front camera and the rear camera may receive an external multimedia datum while the device 500 is in an operation mode, such as a photographing mode or a video mode. Each of the front camera and the rear camera may be a fixed optical lens system or have focus and optical zoom capability.

The audio component 510 is configured to output and/or input audio signals. For example, the audio component 510 includes a microphone ("MIC") configured to receive an external audio signal when the device 500 is in an operation mode, such as a call mode, a recording mode, and a voice recognition mode. The received audio signal may be further stored in the memory 504 or transmitted via the communication component 516. In some embodiments, the audio component 510 further includes a speaker to output audio signals.

The I/O interface 512 provides an interface between the processing component 502 and peripheral interface modules, such as a keyboard, a click wheel, buttons, and the like. The buttons may include, but are not limited to, a home button, a volume button, a starting button, and a locking button.

The sensor component 514 includes one or more sensors to provide status assessments of various aspects of the device 500. For instance, the sensor component 514 may detect an open/closed status of the device 500, relative positioning of components, e.g., the display and the keypad, of the device 500, a change in position of the device 500 or a component of the device 500, a presence or absence of user contact with the device 500, an orientation or an acceleration/deceleration of the device 500, and a change in temperature of the device 500. The sensor component 514 may include a proximity sensor configured to detect the presence of nearby objects without any physical contact. The sensor component 514 may also include a light sensor, such as a CMOS or CCD image sensor, for use in imaging applications. In some embodiments, the sensor component 514 may also include an accelerometer sensor, a gyroscope sensor, a magnetic sensor, a pressure sensor, or a temperature sensor.

The communication component 516 is configured to facilitate communication, wired or wirelessly, between the device 500 and other devices. The device 500 may access a wireless network based on a communication standard, such as WiFi, 2G, or 3G, or a combination thereof. In one exemplary embodiment, the communication component 516 receives a broadcast signal or broadcast associated information from an external broadcast management system via a broadcast channel. In one exemplary embodiment, the communication component 516 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 500 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 504, executable by the processor 520 in the device 500, for performing the above-described methods. For example, the non-transitory computer-readable storage medium may be a ROM, a RAM, a CD-ROM, a magnetic tape, a floppy disc, an optical data storage device, and the like.

The technical solutions provided in embodiments of the disclosure may at least include the following beneficial effect. In a multiple-panel scenario, multiple panels perform channel detection independently or separately, and uplink transmission may be performed based on one or more idle BWUs detected by multiple panels, which may improve the spectrum efficiency while reducing the terminal power consumption.

It may be understood that in the disclosure, "plurality" refers to two or more than two, and other quantifiers are similar. "And/or" describes association relationships of associated objects, indicating that there are three types of relationships, for example, A and/or B, which may mean: A alone exists, A and B exist at the same time, and B exists alone. The character "/" generally indicates that associated objects are in an "or" relationship. The singular "a", "said" and "the" are also intended to include plural forms, unless the context clearly indicates other meanings.

It may be further understood that the terms "first", "second", etc. are used to describe various information, but the information should not be limited to these terms. These terms are only used to distinguish the same type of information from each other, and do not indicate a specific order or degree of importance. In fact, expressions such as "first" and "second" may be used interchangeably. For example, without departing from the scope of the disclosure, the first information may also be referred to as the second information, and similarly, the second information may also be referred to as the first information.

It may be understood that, although the operations are described in a specific order in the drawings in the embodiments of the disclosure, they should not be understood as requiring these operations to be performed in the specific order shown or in a serial order, or requiring execution all the operations shown to get the desired result. In certain circumstances, multitasking and parallel processing may be advantageous.

Other embodiments of the invention will be apparent to those skilled in the art from consideration of the specification and practice of the invention disclosed here. This application is intended to cover any variations, uses, or adaptations of the invention following the general principles thereof and including such departures from the disclosure as come within known or customary practice in the art.

It is intended that the scope of the invention only be limited by the appended claims.

## Claims

1. A method for transmitting data, performed by a terminal comprising at least two antenna panels, **wherein the method comprises:**
performing channel detection by each of the at least two antenna panels on each bandwidth unit, BWU, to be detected on an active bandwidth part, BWP, and determining one or more idle BWUs detected by each of the at least two antenna panels on the BWP;
selecting (S11) one or more BWUs as a first BWU subset, from a first BWU set, wherein the first BWU set is determined based on the one or more idle BWUs detected by each of the at least two antenna panels on the BWP; and
transmitting (S12) uplink information by one or more antenna panels of the at least two antenna panels separately on one or more BWUs in the first BWU subset.

2. The method as claimed in claim 1, wherein the BWU to be detected is determined based on downlink control information or an uplink grant-free resource pre-configuration signaling.

3. The method as claimed in claim 1 or 2, wherein performing the channel detection by each of the at least two antenna panels on each BWU to be detected, comprises:
selecting individually a channel detection mechanism and/or a channel detection parameter, by each of the at least two antenna panels, based on a channel detection priority of uplink information to be transmitted; and
performing individually the channel detection by each of the at least two antenna panels on each BWU to be detected based on the channel detection mechanism and/or channel detection parameter selected individually.

4. The method as claimed in claim 1, wherein the one or more idle BWUs detected by each of the at least two antenna panels comprise one or more same BWUs; and
wherein the first BWU set is a set comprising the one or more same idle BWUs detected by each of the at least two antenna panels.

5. The method as claimed in claim 1, wherein the one or more idle BWUs detected by each of the at least two antenna panels are not completely the same; and
wherein the first BWU set is a set comprising all idle BWUs detected by each of the at least two antenna panels.

6. The method as claimed in claim 1, wherein the one or more idle BWUs detected by each of the at least two antenna panels are not completely the same; and
wherein the first BWU set is a set comprising all idle BWUs detected by a designated antenna panel of the at least two antenna panels.

7. The method as claimed in any one of claims 4 to 6, further comprising:
transmitting indication information for indicating the one or more idle BWUs detected by each antenna panel and/or one or more BWUs for transmitting uplink information by each antenna panel.

8. The method as claimed in claim 7, wherein the indication information is transmitted in one or a combination of:
transmitting the indication information based on a demodulation reference signal (DMRS);
transmitting the indication information based on a reference signal;
transmitting the indication information based on, a state whether a BWU is idle, indicated by a physical uplink control channel (PUCCH);
transmitting the indication information based on, a state whether a BWU is idle, indicated by a physical uplink shared channel (PUSCH);
transmitting the indication information based on a signal transmitted on an idle BWU;
transmitting the indication information based on a wireless fidelity preamble; and
transmitting the indication information based on a random access preamble transmitted on an idle BWU.

9. The method as claimed in claim 7, wherein there are different antenna panels in the at least two antenna panels, and one or more idle BWUs detected by the different antenna panels are different and/or one or more BWUs for transmitting uplink information are different; and
the indication information is transmitted separately for each of the different antenna panels.

10. The method as claimed in claim 6, wherein the designated antenna panel is an antenna panel with a largest number of idle BWUs detected.

11. An apparatus for transmitting data, applicable to a terminal comprising at least two antenna panels, comprising:
a processing unit (401), configured to perform channel detection by each of the at least two antenna panels on each bandwidth unit, BWU, to be detected on an active bandwidth part, BWP, and determine one or more idle BWUs detected by each of the at least two antenna panels on the BWP, and select one or more BWUs as a first BWU subset, from a first BWU set, wherein the first BWU set is determined based on the one or more idle BWUs detected by each of the at least two antenna panels on the BWP; and
a transmitting unit (402), configured to transmit uplink information by one or more antenna panels of the at least two antenna panels separately on one or more BWUs in the first BWU subset.

12. A non-transitory computer-readable storage medium, wherein when instructions in the storage medium are executed by a processor of a mobile terminal, the mobile terminal performs the method as claimed in any one of claims 1 to 10.

## Patentansprüche

1. Verfahren zum Übertragen von Daten, das von einem Endgerät mit mindestens zwei Antennenfeldern durchgeführt wird, **wobei das Verfahren umfasst:**
Durchführen einer Kanalerfassung durch jedes der mindestens zwei Antennenfelder auf jeder Bandbreiteneinheit, BWU, die auf einem aktiven Bandbreitenteil, BWP, erfasst werden soll, und Bestimmen einer oder mehrerer freier BWUs, die von jedem der mindestens zwei Antennenfelder auf dem BWP erfasst werden;
Auswählen (S11) einer oder mehrerer BWUs als eine erste BWU-Teilmenge aus einer ersten BWU-Menge, wobei die erste BWU-Menge auf der Grundlage der einen oder mehreren freien BWUs bestimmt wird, die von jedem der mindestens zwei Antennenfelder auf dem BWP erfasst werden; und
Übertragen (S12) von Uplink-Informationen durch ein oder mehrere Antennenfelder der mindestens zwei Antennenfelder getrennt auf einer oder mehreren BWUs in der ersten BWU-Teilmenge.

2. Verfahren nach Anspruch 1, wobei die zu erfassende BWU auf der Grundlage von Downlink-Kontrollinformationen oder einer Vorab-Konfigurationsmeldung für eine zugangsfreie Ressource in der Aufwärtsstrecke bestimmt wird.

3. Verfahren nach Anspruch 1 oder 2, wobei die Kanalerfassung durch jedes der mindestens zwei Antennenfelder auf jeder zu erfassenden BWU durchgeführt wird, umfassend:
individuelles Auswählen eines Kanalerfassungsmechanismus und/oder eines Kanalerfassungsparameters durch jedes der mindestens zwei Antennenfelder auf der Grundlage einer Kanalerfassungspriorität der zu übertragenden Uplink-informationen; und
individuelle Durchführung der Kanalerfassung durch jedes der mindestens zwei Antennenfelder auf jeder zu erfassenden BWU auf der Grundlage des individuell ausgewählten Kanalerfassungsmechanismus und/oder Kanalerfassungsparameters.

4. Verfahren nach Anspruch 1, wobei die eine oder die mehreren freien BWUs, die von jedem der mindestens zwei Antennenfelder erfasst werden, eine oder mehrere gleiche BWUs umfassen; und
wobei der erste BWU-Satz ein Satz ist, der eine oder mehrere gleiche freie BWUs umfasst, die von jedem der mindestens zwei Antennenfelder erfasst werden.

5. Verfahren nach Anspruch 1, wobei die eine oder die mehreren Idle- bzw. Leerlauf-BWUs, die von jedem der mindestens zwei Antennenfelder erfasst werden, nicht vollständig gleich sind; und
wobei der erste BWU-Satz ein Satz ist, der alle inaktiven BWUs umfasst, die von jedem der mindestens zwei Antennenfelder erfasst werden.

6. Verfahren nach Anspruch 1, wobei die eine oder die mehreren Leerlauf-BWUs, die von jedem der mindestens zwei Antennenfelder erfasst werden, nicht vollständig gleich sind; und
wobei der erste BWU-Satz ein Satz ist, der alle inaktiven BWUs umfasst, die von einem bestimmten Antennenfeld der mindestens zwei Antennenfelder erfasst werden.

7. Das Verfahren nach einem der Ansprüche 4 bis 6, das ferner umfasst:
Übertragung von Anzeigeinformationen zur Anzeige der einen oder mehreren von jedem Antennenfeld erkannten freien BWUs und/oder einer oder mehrerer BWUs zur Übertragung von Uplink-Informationen durch jedes Antennenfeld.

8. Verfahren nach Anspruch 7, wobei die Anzeigeinformationen in einer oder einer Kombination aus übertragen werden:
die Übertragung der Anzeigeinformationen auf der Grundlage eines Demodulationsreferenzsignals (DMRS);
die Übermittlung der Anzeigeinformationen auf der Grundlage eines Referenzsignals;
Übertragen der Anzeigeinformationen auf der Grundlage eines Zustands, ob eine BWU im Leerlauf ist, der durch einen physikalischen Uplink-Steuerungskanal (PUCCH) angezeigt wird;
Übertragen der Anzeigeinformationen auf der Grundlage eines Zustands, ob eine BWU im Leerlauf ist, der durch einen gemeinsam genutzten physikalischen Uplinkkanal (PUSCH) angezeigt wird;
Übermittlung der Anzeigeinformationen auf der Grundlage eines Signals, das auf einer freien BWU übertragen wird;
Übertragen der Anzeigeinformationen auf der Grundlage einer Wireless-Fidelity-Präambel; und
Übertragung der Anzeigeinformationen auf der Grundlage einer Zufallszugriffspräambel, die auf einer freien BWU übertragen wird.

9. Verfahren nach Anspruch 7, wobei es in den mindestens zwei Antennenfeldern unterschiedliche Antennenfelder gibt und eine oder mehrere Leerlauf-BWUs, die von den unterschiedlichen Antennenfeldern erfasst werden, unterschiedlich sind und/oder eine oder mehrere BWUs zum Übertragen von Uplink-Informationen unterschiedlich sind; und
die Anzeigeinformationen für jedes der verschiedenen Antennenfelder getrennt übertragen werden.

10. Verfahren nach Anspruch 6, wobei es sich bei dem bestimmten Antennenfeld um ein Antennenfeld handelt, bei dem die größte Anzahl von Leerlauf-BWUs festgestellt wurde.

11. Eine Vorrichtung zur Datenübertragung, die für ein Endgerät mit mindestens zwei Antennenfeldern geeignet ist, umfassend:
eine Verarbeitungseinheit (401), die so konfiguriert ist, dass sie eine Kanalerfassung durch jedes der mindestens zwei Antennenfelder auf jeder Bandbreiteneinheit, BWU, durchführt, die auf einem aktiven Bandbreitenteil, BWP, erfasst werden soll, und eine oder mehrere freie BWUs bestimmt, die durch jedes der mindestens zwei Antennenfelder auf dem BWP erfasst werden, und eine oder mehrere BWUs als eine erste BWU-Untergruppe aus einem ersten BWU-Satz auswählt, wobei der erste BWU-Satz auf der Grundlage der einen oder mehreren freien BWUs bestimmt wird, die durch jedes der mindestens zwei Antennenfelder auf dem BWP erfasst werden; und
eine Sendeeinheit (402), die so konfiguriert ist, dass sie Uplink-Informationen durch eine oder mehrere Antennenfelder der mindestens zwei Antennenfelder separat auf einer oder mehreren BWUs in der ersten BWU-Teilmenge sendet.

12. Nicht-transitorisches, computerlesbares Speichermedium, wobei, wenn Anweisungen in dem Speichermedium von einem Prozessor eines mobilen Endgeräts ausgeführt werden, das mobile Endgerät das Verfahren nach einem der Ansprüche 1 bis 10 durchführt.

## Revendications

1. Méthode de transmission de données, exécutée par un terminal comprenant au moins deux panneaux d'antenne, dans laquelle **la méthode comprend** :
effectuer une détection de canal par chacun des au moins deux panneaux d'antenne sur chaque unité de largeur de bande, BWU, à détecter sur une partie active de la largeur de bande, BWP, et déterminer une ou plusieurs BWU inactives détectées par chacun des au moins deux panneaux d'antenne sur la BWP ;
sélectionner (S11) un ou plusieurs BWU en tant que premier sous-ensemble BWU, à partir d'un premier ensemble BWU, le premier ensemble BWU étant déterminé sur la base d'un ou plusieurs BWU inactifs détectés par chacun des au moins deux panneaux d'antenne sur le BWP ; et
transmettre (S12) des informations de liaison montante par un ou plusieurs panneaux d'antenne parmi les deux panneaux d'antenne au moins, séparément, sur une ou plusieurs BWU du premier sous-ensemble BWU.

2. Méthode selon la revendication 1, dans laquelle la BWU à détecter est déterminée sur la base d'informations de contrôle de la liaison descendante ou d'un signal de préconfiguration de ressource sans concession sur la liaison montante.

3. Méthode selon la revendication 1 ou 2, dans laquelle la détection du canal par chacun des au moins deux panneaux d'antenne sur chaque BWU à détecter comprend :
sélectioner individuellement d'un mécanisme de détection de canal et/ou d'un paramètre de détection de canal, par chacun des au moins deux panneaux d'antenne, sur la base d'une priorité de détection de canal de l'information de liaison montante à transmettre ; et
effectuer individuellement la détection du canal par chacun des au moins deux panneaux d'antenne sur chaque BWU à détecter, sur la base du mécanisme de détection du canal et/ou du paramètre de détection du canal sélectionné individuellement.

4. Méthode selon la revendication 1, dans laquelle l'un ou plusieurs BWU inactifs détectés par chacun des au moins deux panneaux d'antenne comprennent un ou plusieurs mêmes BWU ; et
dans lequel le premier ensemble de BWU est un ensemble comprenant un ou plusieurs BWU inactifs identiques détectés par chacun des au moins deux panneaux d'antenne.

5. Méthode selon la revendication 1, dans laquelle l'un ou plusieurs BWU inactifs détectés par chacun des au moins deux panneaux d'antenne ne sont pas complètement identiques ; et
dans lequel le premier ensemble de BWU est un ensemble comprenant tous les BWU inactifs détectés par chacun des au moins deux panneaux d'antenne.

6. Méthode selon la revendication 1, dans laquelle l'un ou plusieurs BWU inactifs détectés par chacun des au moins deux panneaux d'antenne ne sont pas complètement identiques ; et
dans lequel le premier ensemble de BWU est un ensemble comprenant tous les BWU inactifs détectés par un panneau d'antenne désigné parmi les deux panneaux d'antenne au moins.

7. Méthode selon l'une des revendications 4 à 6, comprenant en outre :
transmettre des informations d'indication pour indiquer une ou plusieurs BWU inactives détectées par chaque panneau d'antenne et/ou une ou plusieurs BWU pour transmettre des informations sur la liaison montante par chaque panneau d'antenne.

8. Méthode selon la revendication 7, dans laquelle l'information d'indication est transmise dans un ou une combinaison de :
transmettre les informations d'indication sur la base d'un signal de référence de démodulation (DMRS) ;
transmettre l'information d'indication sur la base d'un signal de référence ;
transmettre les informations d'indication en fonction de l'état d'inactivité d'un BWU, indiqué par un canal de commande de liaison montante physique (PUCCH) ;
transmettre les informations d'indication en fonction de l'état d'inactivité d'un BWU, indiqué par un canal partagé de liaison montante physique (PUSCH) ;
transmettre l'information d'indication sur la base d'un signal transmis sur une BWU en veille ;
transmettre l'information d'indication sur la base d'un préambule de fidélité sans fil ; et
transmettre l'information d'indication sur la base d'un préambule d'accès aléatoire transmis sur une BWU inactive.

9. Méthode selon la revendication 7, dans laquelle les au moins deux panneaux d'antenne comportent différents panneaux d'antenne, et un ou plusieurs BWU inactifs détectés par les différents panneaux d'antenne sont différents et/ou un ou plusieurs BWU pour la transmission d'informations sur la liaison montante sont différents ; et
l'information d'indication est transmise séparément pour chacun des différents panneaux d'antenne.

10. Méthode selon la revendication 6, dans laquelle le panneau d'antenne désigné est un panneau d'antenne pour lequel on a détecté le plus grand nombre de BWU inactives.

11. Appareil de transmission de données, applicable à un terminal comprenant au moins deux panneaux d'antenne, comprenant :
une unité de traitement (401), configurée pour effectuer une détection de canal par chacun des au moins deux panneaux d'antenne sur chaque unité de largeur de bande, BWU, à détecter sur une partie de largeur de bande active, BWP, et déterminer une ou plusieurs BWU inactives détectées par chacun des au moins deux panneaux d'antenne sur la BWP, et sélectionner une ou plusieurs BWU en tant que premier sous-ensemble BWU, à partir d'un premier ensemble BWU, le premier ensemble BWU étant déterminé sur la base d'une ou plusieurs BWU inactives détectées par chacun des au moins deux panneaux d'antenne sur la BWP ; et
une unité d' émission (402), configurée pour transmettre des informations de liaison montante par un ou plusieurs panneaux d'antenne des deux panneaux d'antenne au moins, séparément, sur une ou plusieurs BWU du premier sous-ensemble BWU.

12. Support de stockage non transitoire lisible par ordinateur, dans lequel, lorsque les instructions du support de stockage sont exécutées par un processeur d'un terminal mobile, le terminal mobile exécute la méthode décrite dans l'une des revendications 1 à 10.
